# EUROPÄISCHE PATENTSCHRIFT

(11) **EP 1 876 690 B1**
(45) Veröffentlichungstag und Bekanntmachung des Hinweises auf die Patenterteilung: **19.09.2012**
(21) Anmeldenummer: 06013758.5
(22) Anmeldetag: 03.07.2006
(51) Int. Cl.: H02K 15/02, G01M 99/00

(54) **Druckvorrichtung zum Überprüfen eines Blechpaketes**
Pressing device for checking a stack of laminations
Dispositif de compression pour la vérification d'un paquet de tôles

(43) Veröffentlichungstag der Anmeldung: 09.01.2008
(73) Patentinhaber: SIEMENS AKTIENGESELLSCHAFT, 80333 München (DE)
(72) Erfinder: Lehmann, Christoph, Dr., 47506 Neukirchen-Vluyn (DE); Mazurkiewicz, Ulrich, 46049 Oberhausen (DE); Twiling, Gerd, 45711 Datteln (DE)

(56) Entgegenhaltungen:
- DE-A1- 3 442 389
- FR-A1- 2 725 850

## Beschreibung

Die Erfindung betrifft eine Druckvorrichtung zum Ausüben einer Druckkraft auf ein aus Segmentblechen gebildetes Blechpaket einer dynamoelektrischen Maschine.

Die Erfindung betrifft des Weiteren ein Verfahren zur Überprüfung der Pressung eines Blechpaketes einer dynamoelektrischen Maschine.

Unter einer dynamoelektrischen Maschine im Sinne der vorliegenden Anmeldung wird jeder Energiewandler verstanden, der elektrische in mechanische Energie oder mechanische in elektrische Energie umwandelt. Insbesondere ist unter einer dynamoelektrischen Maschine ein Generator zur elektrischen Energieversorgung zu verstehen.

Ein Generator als Ausführungsform einer dynamoelektrischen Maschine besteht unter anderem aus elektrisch aktiven Teilen, zu denen ein Ständer und ein drehbar gelagerter Läufer gehören. Der Ständer und der Läufer können aus aufeinander geschichteten Segmentplatten bestehen, die auch als Segmentbleche oder Eisenbleche bezeichnet werden können. Die Segmentbleche sind mit Nuten zur Aufnahme von Wicklungen versehen. Eine hohe Magnetisierbarkeit und kleine Hysterese- oder Wirbelstromverluste der Segmentbleche sind von Vorteil. Durch dünne Papier-, Lack- oder Oxidschichten werden die Segmentbleche gegeneinander isoliert. Ein komplett ausgebildeter Ständer oder Läufer kann aus vielen Segmentblechen bestehen. Das Gebilde der aufeinander gestapelten Segmentbleche wird als Blechpaket bezeichnet.

Üblicherweise werden die Segmentbleche in einer Ausdehnungsrichtung möglichst nah aneinander gestapelt und in einer Umfangsrichtung nebeneinander angelegt. Die Segmentbleche sind üblicher Weise gegeneinander elektrisch isoliert und je nach Leistungsgröße der elektrischen Maschine weist das Blechpaket zwischen 10.000 bis 150.000 Segmentbleche auf.

Üblicherweise werden solche dynamoelektrischen Maschinen derart aufgebaut, dass zwischen zwei Druckplatten die Segmentbleche mittels sog. Zuganker gegeneinander gedrückt werden. Dazu werden mehrere Zuganker verwendet. Bei der Fertigung muss darauf geachtet werden, dass die Kräfte von einem Segmentblech zum nächsten Segmentblech in allen Bereichen der elektrischen Maschine möglichst gleich ist. Im Betrieb besteht die Gefahr, dass die zusammenhaltenden Kräfte von Segmentblech zu Segmentblech nicht ausreichend sind und sich dadurch ein geringer Spalt zwischen zwei Segmentblechen ausbilden kann. Solch ein Spalt kann durch im Betrieb auftretende Schwingungen zu Schäden führen und sollte daher vermieden werden.

In der FR 2 725 850 A1 wird ein Verfahren zum Überprüfen eines Blechpakets offenbart, bei dem eine schaubenzwingenähnliche Druckvorrichtung verwendet wird.

In der Regel wird ein Blechpaket mit einfachen Mitteln wie z.B. mit einem Taschenmesser getestet, in dem das Taschenmesser zwischen zwei Segmentblechen angeordnet wird und Kraft auf die Segmentbleche aufgebracht und analysiert wird.

Solche Methoden sind von provisorischer Natur und bieten kein reproduzierbares Ergebnis.

Daher ist es wünschenswert, eine Möglichkeit zu haben, mit der geprüft werden kann, ob in einem Blechpaket die Segmente ordnungsgemäß beieinander liegen.

An dieser Stelle setzt die Erfindung an, deren Aufgabe es ist, eine Vorrichtung anzugeben, mit der reproduzierbar geprüft werden kann, ob ein Blechpaket einer dynamoelektrischen Maschine eine ordnungsgemäße Pressung aufweist.

Eine weitere Aufgabe der Erfindung ist es, ein Verfahren anzugeben, mit dem die Pressung eines Blechpaketes einer dynamoelektrischen Maschine überprüft werden kann.

Die auf die Vorrichtung hin gerichtete Aufgabe wird gelöst durch eine Druckvorrichtung zum Ausüben einer Druckkraft auf ein aus Segmentblechen gebildetes Blechpaket einer dynamo-elektrischen Maschine, gemäß dem Anspruch 1

Die Erfindung geht von dem Aspekt aus, dass an einer geeigneten Stelle des Blechpaketes eine Druckvorrichtung angebracht werden kann, mit der es möglich ist, eine vorgegebene Druckkraft zum Auseinanderdrücken der Segmentbleche hervorzurufen. Die meisten Blechpakete weisen zu Kühlungszwecken einen Spalt zwischen zwei Segmentblechen auf, die einen definierten Abstand haben, die zu einer Spaltbreite führt. Wenn eine Druckvorrichtung in einen solchen Spalt angebracht wird, ändert sich die Spaltbreite unter Kraftauswirkungen nur geringfügig, sofern das Blechpaket ordnungsgemäß gepresst ist. Wenn allerdings das Blechpaket nicht ordnungsgemäß gepresst ist, kann vergleichsweise mit geringen Kräften, die von der Druckvorrichtung auf die Segmentbleche ausgeübt werden, die Spaltbreite vergrößert werden. Das bedeutet, dass über die aufgewendete Kraft zur Spaltbreitenvergrößerung zwei Messgrößen gewonnen werden können, mit denen zweifelsfrei analysiert werden kann, ob ein Blechpaket ordnungsgemäß gepresst ist. Diese Analyse ist reproduzierbar, so dass die Entscheidung, ob ein Blechpaket in Ordnung ist oder nicht, nicht von den individuellen Fähigkeiten eines Prüfers abhängt.

Die auf das Verfahren hin gerichtete Aufgabe wird gelöst durch ein Verfahren zur Überprüfung der Pressung eines Blechpaketes einer dynamoelektrischen Maschine, gemäß dem Anspruch 7.

In einer vorteilhaften Weiterbildung sind die Konuskörper derart ausgebildet, dass eine Bewegung der Konuskörper zu einer Aufweitung des Grundkörpers führt. Dadurch ist ein vergleichsweise einfacher Mechanismus vorgestellt, mit dem eine Kraft von der Druckvorrichtung auf das Segmentblech zum Auseinanderdrücken ausgeübt werden kann.

Vorteilhafterweise sind die Konuskörper länglich ausgebildet, wobei ein Ende dicker als das andere Ende ist. Dadurch ist eine mechanische Anordnung vorgestellt, die durch einen einfachen Aufbau sich auszeichnet und dadurch wartungsarm ist.

Vorteilhafterweise ist die Druckvorrichtung am dicker ausgebildeten Ende konusartig ausgebildet. Damit die Konuskörper einfach und präzise, d. h. ohne zu verrutschen gegen den Grundkörper bewegt werden können, weist der Grundkörper eine Bohrung auf, in der die Konuskörper angeordnet sind.

Vorteilhafterweise weist der Grundkörper eine Spreizzunge auf, die derart ausgebildet ist, dass eine Bewegung der Konuskörper ein Spreizen der Spreizzunge hervorruft. Damit ist eine einfache Möglichkeit gegeben, die Kraft, die durch das Aufweiten des Grundkörpers entsteht, zu verstärken, da eine Spreizzunge vergleichsweise flexibel ausgebildet ist.

Damit die Druckvorrichtung mit einfachen Mitteln betrieben werden kann, ist diese derart ausgebildet, dass die Konuskörper eine Gewinde aufweisen, wobei auf das Gewinde eine Mutter anbringbar ist, wobei die Konuskörper und der Grundkörper derart ausgebildet sind, dass eine Bewegung der Mutter zu der Aufweitung des Grundkörpers führt.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wozu Erläuterungen dienen, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Im Einzelnen zeigt die Zeichnung in:
- Figur 1: eine perspektivische Darstellung eines Ständers einer dynamoelektrischen Maschine,
- Figur 2: eine Querschnittansicht eines Teils eines Blechpaketes,
- Figur 3: eine vergrößerte Darstellung eines Teiles des Blechpaketes,
- Figur 4: Darstellung eines einzelnen Segmentbleches,
- Figur 5: perspektivische Darstellung eines Segmentbleches mit Distanzstegen,
- Figur 6: eine an ein einzelnes Segmentblech angeordnete Druckvorrichtung,
- Figur 7: Vorderansicht eines Grundkörpers,
- Figur 8: Seitenansicht des Grundkörpers,
- Figur 9: Seitenansicht eines Konuskörpers.

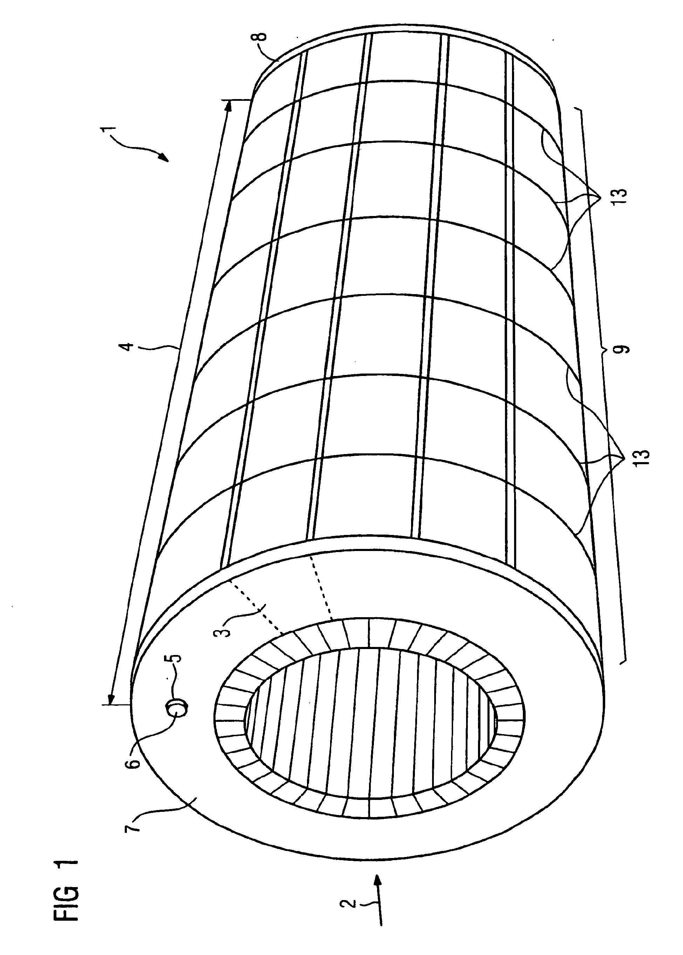

In Figur 1 ist eine perspektivische Darstellung eines Stators einer dynamoelektrischen Maschine 1 zu sehen. Die dynamoelektrische Maschine 1 ist um eine nicht näher dargestellte Rotationsachse 2 rotationssymmetrisch aufgebaut. Ein Generator oder Transformator als Ausführungsform einer dynamoelektrischen Maschine 1 besteht aus physikalischen Gründen aus einer Vielzahl von Segmentblechen 3. Die Segmentbleche 3 werden üblicher Weise aus Stahl gefertigt. Die Segmentbleche 3 werden in einer Ausdehnungsrichtung 4 aufeinander gelegt. Das Anlegen der einzelnen Segmentbleche 3 erfolgt automatisch, halbautomatisch oder per Hand. Die Segmentbleche 3 sollten in der Ausdehnungsrichtung 4 möglichst dicht beieinander liegen, damit Schwingungen und unerwünschte Vibrationen unterbleiben. Dazu weisen die Segmentbleche 3 Bohrungen 5 auf. Die Segmentbleche 3 sind dabei derart hintereinander angeordnet, dass die Bohrungen 5 fluchtend hintereinander angeordnet sind, so dass ein Zuganker 6 in der Bohrung 5 angeordnet werden kann. Üblicherweise werden dynamoelektrische Maschinen 1 derart aufgebaut, dass zwischen zwei Druckplatten 7, 8 die Segmentbleche 3 mittels der Zuganker 6 zusammengedrückt werden. Dafür ist der Zuganker 6 üblicherweise als eine Stahlgewindestange ausgeführt, die an der Druckplatte 7 und 8 herausragt, wobei mittels Muttern, die an der Druckplatte 7 und an der Druckplatte 8 angeordnet sind, eine Kraft ausüben können. Zur Kühlung des Blechpakets 9 werden üblicherweise Kühlschlitze 13 in das Blechpaket 9 eingebracht.

Das so aufgebaute Gebilde wird als Blechpaket 9 bezeichnet. Die Segmentbleche 3 sind üblicherweise elektrisch gegeneinander isoliert. Je nach Leistungsgröße der elektrischen Maschine 1 weist das Blechpaket 9 zwischen 10.000 bis 150.000 Segmentbleche 3 auf.

Ein Blechpaket 9 weist mehrere Zuganker 6 auf, damit eine Kraftverteilung der Druckplatte 7 auf die Druckplatte 8 gleichmäßig erfolgen kann. Daher sollten die Drehmomente der Muttern, die an dem Zuganker 6 angeordnet sind, möglichst gleich große Werte aufweisen. Sollte fehlerhafterweise ein Zuganker 6 mit Muttern angeordnet sein, die ein abweichendes Drehmoment aufweisen, kann dies dazu führen, dass einzelne Segmentbleche 3 im Blechpaket 9 sich lockern können.

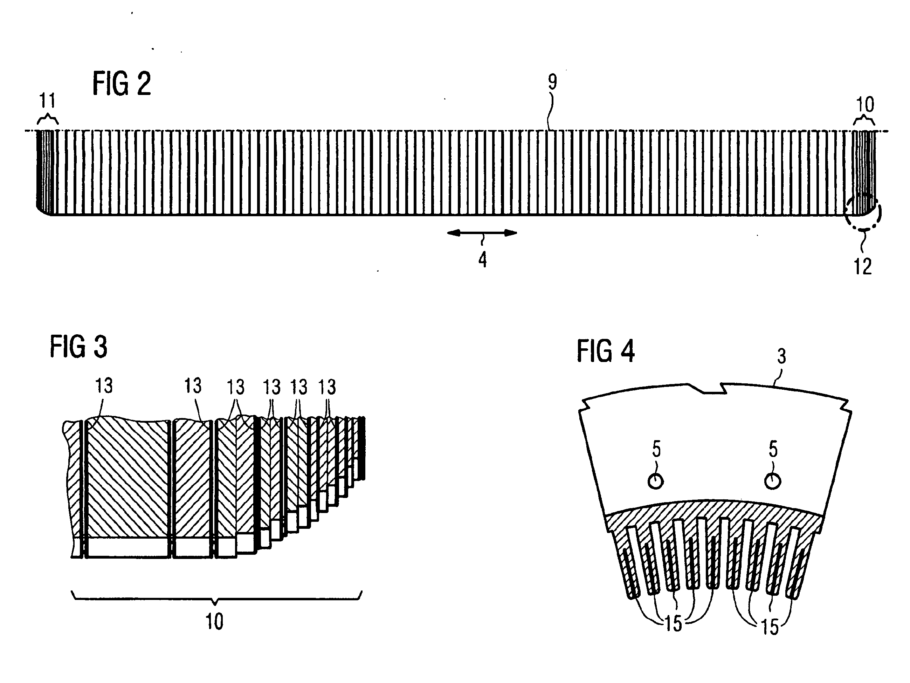

In der Figur 2 ist eine Seitenansicht des Blechpaketes 9 dargestellt. Der Übersichtlichkeit wegen wurden einzelne Segmentbleche 3 nicht eingezeichnet. Genauso wenig wurde auf die Darstellung der Zuganker 6 verzichtet. Die in der Figur 2 dargestellte Ausführungsform des Blechpaketes 9 weist an ihren Enden 10 und 11 unterschiedliche Radien auf.

In der Figur 3 ist ein vergrößerter Ausschnitt eines Teils 12 des Blechpaketes der in Figur 2 dargestellten Ausführungsform zu sehen. Das Ende 10 des Blechpakets 9 weist Abschlusssegmentbleche 13 mit Distanzstegen 14 auf. Der Übersichtlichkeit wegen sind keine einzelnen Segmentbleche 3 dargestellt. Zwischen dem Abschlusssegmentblech 13 und dem daneben liegenden Segmentblech 3 bildet sich ein Spalt durch den ein Kühlmedium hindurchströmen kann. Der Figur 4 ist ein einzelnes Segmentblech 3 dargestellt. Das Segmentblech 3 weist so genannte Zähne 15 auf, die der Übersichtlichkeit wegen in der Figur 4 schraffiert dargestellt sind. Zwischen den Zähnen 15 werden sozusagen die Leiter angeordnet, in die ein elektrischer Strom, infolge einer Drehbewegung des Rotors, induziert werden kann.

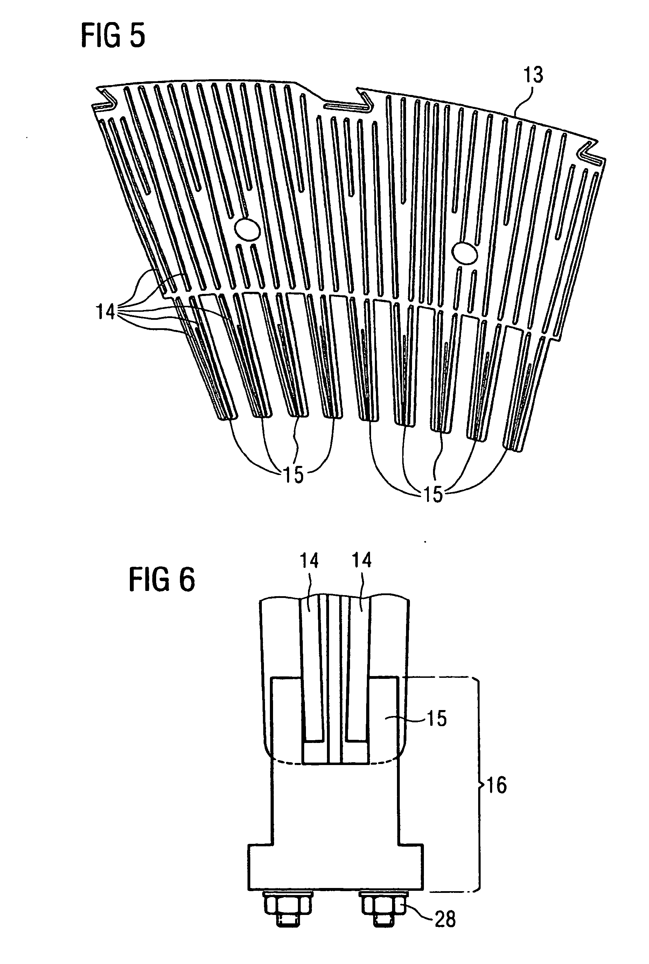

In der Figur 5 ist ein Abschlusssegmentblech 13 mit Distanzstegen 14 zu sehen. Der Übersichtlichkeit wegen sind lediglich einige ausgewählte Distanzstege 14 mit dem Bezugszeichen 14 versehen. Die Distanzstege 14 sind am Zahn 15 derart angeordnet, dass sie an den seitlichen Rändern des Zahnes 15 angeordnet sind.

In der Figur 6 ist eine Druckvorrichtung zum Ausüben einer Druckkraft auf ein aus Segmentblechen 3 gebildetes Blechpaket einer dynamoelektrischen Maschine 1 dargestellt, wobei die Druckvorrichtung 16 zwischen zwei Segmentblechen 3, 13 anbringbar ist und derart ausgebildet ist, dass von der Druckvorrichtung 16 eine Druckkraft zum Auseinanderdrücken der Segmentbleche 3 ausübbar ist. Die Druckvorrichtung 16 wird hierbei am Zahn 15 angeordnet, wobei die Druckvorrichtung um die Distanzstege 14 angeordnet wird.

Die Druckvorrichtung 16 weist hierbei einen Grundkörper 17 und einen zum Grundkörper verschiebbar angeordneten Konuskörper 18 auf. Der Konuskörper 18 ist dabei derart ausgebildet, dass eine Bewegung des Konuskörpers 18 zu einer Aufweitung des Grundkörpers 17 führt.

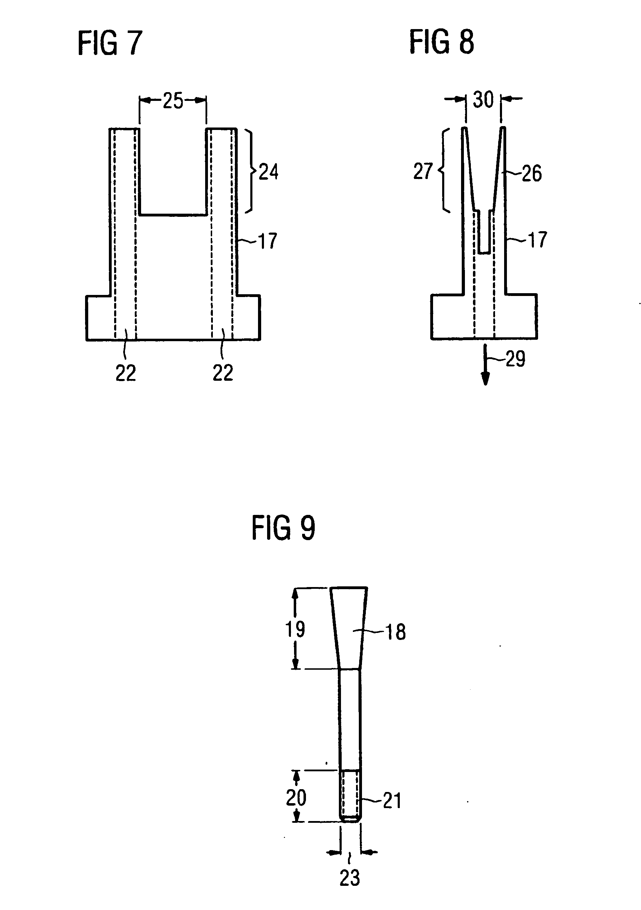

In der Figur 9 ist der Konuskörper 18 dargestellt. Der Konuskörper 18 weist ein dickes Ende 19 und ein dünnes Ende 20 auf. Am dünnen Ende 20 ist ein Gewinde 21 angebracht. An dem Gewinde 21 wird eine Mutter angeordnet. Der Konuskörper 18 ist länglich ausgebildet, wobei das Ende 19 dicker ausgebildet ist als das Ende 20.

In der Figur 7 ist der Grundkörper 17 dargestellt. Der Grundkörper 17 weist eine Bohrung 22 auf, in der der Konuskörper 18 angeordnet werden kann. Dafür ist der Durchmesser der Bohrung 22 ein wenig größer als der Durchmesser 23 des Konuskörpers 18. Der Grundkörper 17 weist ein U-förmiges Ende 24 auf, wobei die Schenkel einen Abstand 25 zueinander haben, der so groß ist, dass die beiden Schenkel an zwei Distanzstegen 14 eines Zahnes 15 angelegt werden können.

Der Grundkörper 17 weist eine Spreizzunge 26 auf, die derart ausgebildet ist, dass eine Bewegung des Konuskörpers 18 ein Spreizen der Spreizzunge 26 hervorruft. Die Spreizzunge 26 weist eine konusartige Bohrung 27 auf, die im Wesentlichen die gleiche Steigung aufweist, wie das konusartige Ende 19 des Konuskörpers 18.

Der Konuskörper 18 wird in die Bohrung 22 des Grundkörpers 17 eingeführt. Eine Mutter 28 wird an dem Ende 20 des Konuskörpers 18 aufgedreht. Durch Drehen der Mutter 28 bewegt sich der Konuskörper 18 in einer Aufweitungsrichtung 29. Sobald der Konuskörper 18 am konusartigen Ende 26 des Grundkörpers anliegt, bewirkt ein weiters Drehen der Mutter ein Aufweiten der Spreizzunge 26.

Die Druckvorrichtung 16 wird, wie in Figur 6 dargestellt, an einem Zahn 15 des Abschlusssegmentbleches 13 angeordnet. Die Dicke 30 des Grundkörpers 17 ist dabei im Wesentlichen genauso groß wie die Spalte zwischen dem Abschlusssegmentblech 13 und dem benachbarten Segmentblech 3. Um die Pressung des Blechpaketes 9 zu überprüfen wird die Druckvorrichtung 16 derart betrieben, dass diese eine Druckkraft auf das Blechpaket 9 ausübt, wobei mit der Größe der aufgewendeten Druckkraft die Pressung des Blechpaketes 9 ermittelt wird. Zweckmäßigerweise wird hierfür die Messung in verschiedenen Spalten des Blechpaketes 9 durchgeführt. Diese Druckkraft wird mittels einer Mutter 28 ausgeübt, wobei über das aufgewendete Drehmoment an der Mutter 28 die Pressung des Blechpaketes 9 ermittelt werden kann. Beispielsweise führt ein nicht ordnungsgemäß gepresstes Blechpaket 9 zu einem niedrigen Drehmoment, wobei das Drehmoment selbstverständlich größer wird, sobald die Druckvorrichtung 16 die Segmentbleche 3, 13 gegeneinander presst. Allerdings würde hierbei die Spaltgröße verändert werden, wodurch klar wird, dass solch ein Blechpaket 9 nicht ordnungsgemäß gepresst wurde.

Die Druckvorrichtung 16 kann aus unterschiedlichen Materialien hergestellt sein. Zweckmäßigerweise wird die Druckvorrichtung 16 aus Stahl gefertigt. Damit die Druckkraft gleichmäßig von der Druckvorrichtung 16 auf die Segmentbleche 13 ausgeübt wird, sind zwei Bohrungen 22 vorgesehen, in die jeweils ein Konuskörper 18 angeordnet wird.

## Patentansprüche

1. Druckvorrichtung (16) zum Ausüben einer Druckkraft auf ein aus Segmentblechen (3) gebildetes Blechpaket (9) einer dynamoelektrischen Maschine (1),
wobei die Druckvorrichtung (16) zwischen zwei Segmentblechen (3) anbringbar ist
**dadurch gekennzeichnet, dass** die Druckvorrichtung derart ausgebildet ist,
dass von der Druckvorrichtung (16) eine Druckkraft zum Auseinanderdrücken der Segmentbleche (3) ausübbar ist,
wobei die Druckvorrichtung (16) einen Grundkörper (17) und zwei zum Grundkörper (17) verschiebbar angeordneten Konuskörper (18) aufweist.

2. Druckvorrichtung (16) nach Anspruch 1,
wobei die Konuskörper (18) derart ausgebildet sind,
dass eine Bewegung der Konuskörper (18) zu einer Aufweitung des Grundkörpers (17) führt.

3. Druckvorrichtung (16) nach Anspruch 1 oder 2,
wobei die Konuskörper (18) länglich ausgebildet sind und ein Ende (19) dicker ist als das andere Ende (20).

4. Druckvorrichtung (16) nach Anspruch 1, 2 oder 3,
wobei der Grundkörper (17) eine Bohrung (22) aufweist, in denen jeweils ein Konuskörper (18) angeordnet ist.

5. Druckvorrichtung (16) nach Anspruch 4,
wobei der Grundkörper (17) eine Spreizzunge (26) aufweist, die derart ausgebildet ist,
dass eine Bewegung der Konuskörper (18) ein Spreizen der Spreizzunge (26) hervorruft.

6. Druckvorrichtung (16) nach einem der Ansprüche 1 bis 5,
wobei de Konuskörper (18) jeweils ein Gewinde (21) aufweisen,
wobei auf das Gewinde (21) eine Mutter (28) anbringbar ist, wobei die Konuskörper (18) und der Grundkörper (17) derart ausgebildet sind,
dass eine Bewegung der Mutter (28) zu der Aufweitung des Grundkörpers (17) führt.

7. Verfahren zur Überprüfung der Pressung eines Blechpakets (9) einer dynamoelektrischen Maschine (1),
bei dem eine Druckvorrichtung (16) gemäß Anspruch 1 in einem Spalt des Blechpakets (9) angeordnet wird und die Druckvorrichtung (16) eine Druckkraft auf das Blechpaket (9) ausübt,
wobei mit der Größe der aufgewendeten Druckkraft die Pressung des Blechpakets (9) ermittelt wird.

8. Verfahren nach Anspruch 8,
wobei die Messung in verschiedenen Spalten des Blechpakets (9) durchgeführt wird.

9. Verfahren nach Anspruch 8 oder 9,
bei dem die Druckkraft mittels einer Mutter (28) ausgeübt wird und über das aufgewendete Drehmoment an der Mutter (28) die Pressung des Blechpakets (9) ermittelt wird.

## Claims

1. Pressing device (16) for exerting a compressive force on a laminate stack (9) comprising segment laminations (3) of a dynamoelectric machine (1), wherein the pressing device (16) can be attached between two segment laminations (3), **characterized in that** the pressing device is designed in such a way that a compressive force can be exerted by the pressing device (16) for pushing the segment laminations (3) apart from one another, wherein the pressing device (16) has a basic body (17) and two cone bodies (18) which are arranged movably with respect to the basic body (17).

2. Pressing device (16) according to Claim 1, wherein the cone bodies (18) are designed in such a way that a movement of the cone bodies (18) results in widening of the basic body (17).

3. Pressing device (16) according to Claim 1 or 2, wherein the cone bodies (18) are elongate in form and have one end (19) which is thicker than the other end (20).

4. Pressing device (16) according to Claim 1, 2 or 3, wherein the basic body (17) has a bore (22), in which in each case one cone body (18) is arranged.

5. Pressing device (16) according to Claim 4, wherein the basic body (17) has a spreading tongue (26), which is designed in a way such that a movement of the cone bodies (18) causes the spreading tongue (26) to spread.

6. Pressing device (16) according to one of Claims 1 to 5, wherein the cone bodies (18) each have a thread (21), wherein a nut (28) can be attached to the thread (21), wherein the cone bodies (18) and the basic body (17) are designed in such a way that a movement of the nut (28) results in widening of the basic body (17).

7. Method for checking the compression of a laminate stack (9) of a dynamoelectric machine (1), in which a pressing device (16) according to Claim 1 is arranged in a gap in the laminate stack (9), and the pressing device (16) exerts a compressive force on the laminate stack (9), wherein the compression of the laminate stack (9) is determined by the magnitude of the compressive force applied.

8. Method according to Claim 7, wherein the measurement is performed in different gaps in the laminate stack (9).

9. Method according to Claim 7 or 8, in which the compressive force is exerted by means of a nut (28), and the compression of the laminate stack (9) is determined via the torque applied to the nut (28).

## Revendications

1. Dispositif ( 16 ) de pression pour appliquer une force de pression à un paquet ( 9 ) de tôles, formé de tôles ( 3 ) en segments, d'une machine ( 1 ) dynamoélectrique,
dans lequel le dispositif ( 16 ) de pression peut être mis entre deux tôles ( 3 ) en segments,
**caractérisé en ce que** le dispositif de compression est tel, qu'une force de pression pour séparer les tôles ( 3 ) en segments peut être appliquée par le dispositif ( 16 ) de pression,
le dispositif ( 16 ) de pression ayant une pièce ( 17 ) de base et deux pièces ( 18 ) coniques montées coulissantes par rapport à la pièce ( 17 ) de base.

2. Dispositif ( 16 ) de pression suivant la revendication 1, dans lequel les pièces ( 18 ) coniques sont telles qu'un déplacement de la pièce ( 18 ) conique provoque un élargissement de la pièce ( 17 ) de base.

3. Dispositif ( 16 ) de pression suivant la revendication 1 ou 2, dans lequel les pièces ( 18 ) coniques sont oblongues et une extrémité ( 19 ) est plus épaisse que l'autre extrémité ( 20 ).

4. Dispositif ( 16 ) de pression suivant la revendication 1, 2 ou 3,
dans lequel la pièce ( 17 ) de base a un alésage ( 22 ), dans lequel est montée respectivement une pièce ( 18 ) conique.

5. Dispositif ( 16 ) de pression suivant la revendication 4,
dans lequel la pièce ( 17 ) de base comporte une languette ( 26 ) d'écartement qui est telle que,
un déplacement des pièces ( 18 ) coniques provoque un écartement de la languette ( 26 ) d'écartement.

6. Dispositif ( 16 ) de pression suivant l'une des revendications 1 à 5,
dans lequel les pièces ( 18 ) coniques ont respectivement un filetage ( 21 ),
un écrou ( 28 ) peut être mis sur le filetage ( 21 ),
les pièces ( 18 ) coniques et la pièce ( 17 ) de base étant telles,
qu'un mouvement de l'écrou ( 28 ) provoque l'élargissement de la pièce ( 17 ) de base.

7. Procédé de contrôle de la pression d'un paquet ( 9 ) de tôles d'une machine ( 1 ) dynamoélectrique,
dans lequel on monte un dispositif ( 16 ) de pression suivant la revendication 1 dans un intervalle du paquet ( 9 ) de tôles et le dispositif ( 16 ) de pression applique une force de pression au paquet ( 9 ) de tôles,
dans lequel on détermine combien le paquet ( 9 ) de tôles est pressé par la dimension de la force de pression appliquée.

8. Procédé suivant la revendication 7,
dans lequel on effectue la mesure dans des intervalles différents du paquet ( 9 ) de tôles.

9. Procédé suivant la revendication 7 ou 8,
dans lequel on applique la force de pression au moyen d'un écrou ( 28 ) et on détermine combien le paquet ( 9 ) de tôles est pressé par le couple de rotation appliqué à l'écrou ( 28 ).
